# EUROPEAN PATENT SPECIFICATION

(11) **EP 1 125 537 B1**
(45) Date of publication and mention of the grant of the patent: **06.08.2003**
(21) Application number: 01102348.8
(22) Date of filing: 01.02.2001
(51) Int. Cl.: A47J 36/00

(54) **Household appliance**
Haushaltsgerät
Appareil domestique

(30) Priority: 01.02.2000 IT BO000014 U
(43) Date of publication of application: 22.08.2001
(73) Proprietor: Gitronica S.r.l., 62010 Montelupone (IT)
(72) Inventor: Guzzini, Mauro, 62019 Recanati (IT); Senigagliesi, Maurizio, 62012 Civitanova Marche (IT)
(74) Representative: Bongiovanni, Simone

(56) References cited:
- WO-A-97/50045
- DE-A- 19 640 860
- KUHARICH M: "Internet refrigerator" NIKKEI MULTIMEDIA, [Online] 8 May 1998 (1998-05-08), XP002135510 Retrieved from the Internet: <URL:www.west-point.org/users/usma1990/474 14>
- TECHSERVER: "Oven, refrigerator -- meet the Internet" THE NANDO TIMES, [Online] 1 October 1998 (1998-10-01), XP002135511 Retrieved from the Internet: <URL:www.nandotimes.com>

## Description

The present invention relates to a household appliance.

In particular, the present invention relates to a kitchen household appliance, such as an oven, a dishwasher, a washing machine or a fume hood. In addition, in this context, the term "household appliance" must also be understood as a hydromassage tub, a multipurpose shower/sauna cabin, or a fitness device at home or in a gymnasium.

Generally, all the innovations inherent in kitchen household appliances have been designed to improve some components of the latter, such as to increase their efficiency, and/or to render them more economical to produce, but there has not been directed to of all the functions which could advantageously be integrated in any household appliance, in view of the fact that people spend a substantial amount of time in the kitchen in front of the household appliances, interacting with the household appliances themselves.

WO9750045 discloses a refrigerator according to the preamble of claim 1 controlled by a computer; in particular, the refrigerator has a refrigerator door which defines a recessed well in which a laptop sized computer is housed. The recessed well has a size and shape which complements and matches the corresponding size and shape of the laptop computer. An operator interacts with the computer which is located at standing height above ground level to command and direct the computer to perform one or more of a plurality of software controlled functional tasks, wherein each task is controlled by a software program associated with that task which is resident in the computer.

However, the refrigerator disclosed by WO9750045 is much more expensive than a standard refrigerator due to the presence of a laptop computer; furthermore, the use of a personal computer may be too complicated for the standard owner of the refrigerator.

The object of the present innovation is thus to improve a household appliance by incorporating in their interior functions other than those conventionally carried out in an economical and easy-to-use mariner.

According to the present innovation is provided a household as recited by Claim 1.

All of this has the main advantage of considerable simplification of the household appliance, which, instead of having independent electronics in order to allow the user to take part in a competition or a game, as in some embodiments which belong to the known art, makes it possible to use the electronic devices belonging to the household appliance, i.e. which are used to carry out its typical functions, such as washing dishes, in order to take part in a competition with prizes or in a game.

These considerations can apply in particular to fume hoods, which are. in a preferential position above the cooker top, where they can easily be reached and seen by the person who is working in the kitchen. On the other hand, another example which will be described concerns a dishwasher. Nevertheless it is apparent that, without departing from the context of the present invention, it is possible to apply the same teaching to saunas, or to other sanitary devices, such as hydromassage tubs, which can optionally be provided with devices for the production of ultrasound.

The present innovation will now be described with reference to the attached drawings, which illustrate some non-limiting embodiments of it, in which:
Figure 1 is a perspective view, with parts in cross-section, and parts removed for the sake of clarity, of a first embodiment of a household appliance produced according to the dictates of the present invention, and in this case a fume hood;
Figure 2 is a schematic view of some components of the first embodiment illustrated in figure 1;
Figure 3 shows a second embodiment consisting of a dishwasher;
Figure 4 represents a portion of the dishwasher shown in figure 3;
Figure 5 shows a block diagram, which illustrates schematically the functioning of the dishwasher in figure 3;
Figure 6 illustrates a possible block diagram of the method for activation of a competition and/or game, which can be carried out using the same mechanical and electronic components which can programme and implement washing programmes by means of the dishwasher;
Figures 7 and 8 show a possible block diagram of a competition, which can be carried out using the same mechanical and electronic components which can programme and implement washing programmes by means of the dishwasher; and
Figures 9 and 10 show a possible block diagram of a game, which can be carried out using the same mechanical and electronic components which can programme and implement washing programmes by means of the dishwasher.

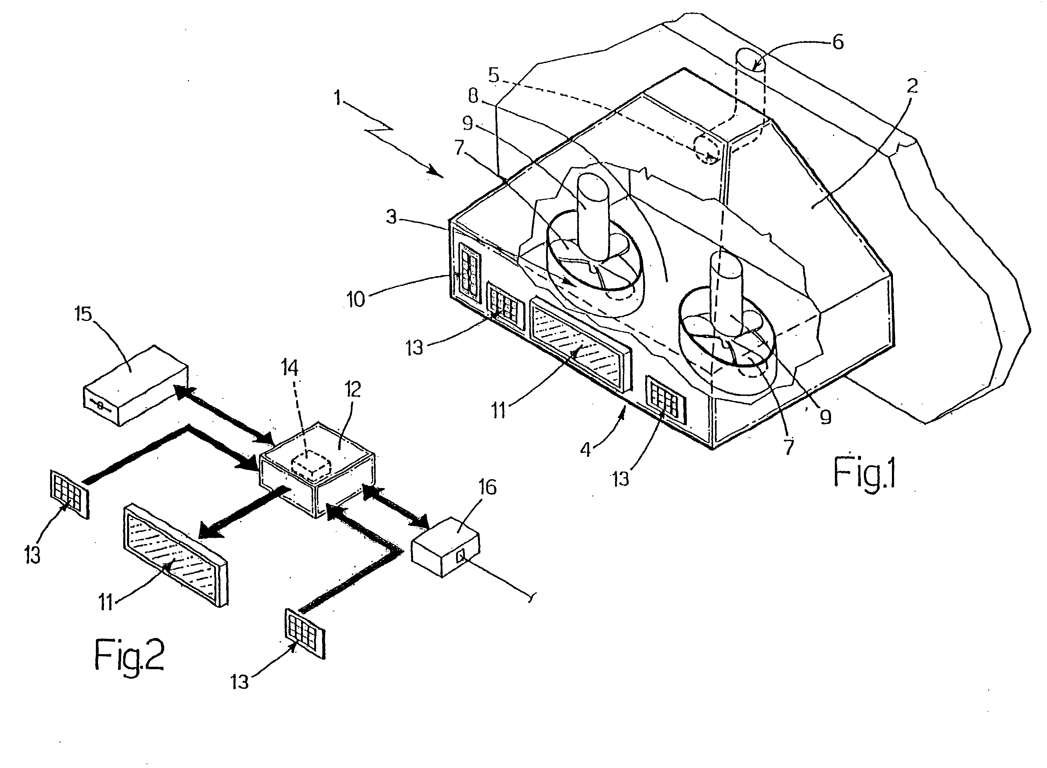

With reference to Figures 1 and 2, the numeral 1 indicates as a whole a household appliance which is particularly suitable for being positioned in any kitchen (not illustrated). In this case, the numeral 1 indicates as a whole a fume hood which can be positioned in a kitchen, above any cooker top (not illustrated).

The fume hood 1 comprises an outer box-type casing 2 which can be positioned above the cooker top, and a suction device 3 which is located inside this casing.

The box-type casing 2 can equally well be made of metal plate or plastics material, and is provided with a suction aperture 4 which is oriented towards the said cooker top, and a discharge aperture 5, which communicates with the exterior of the building, via a fume discharge pipe 6, which is generally embedded inside the wall which supports the box-type casing 2 itself.

With reference to Figure 1, in the example illustrated, the box-type casing 2 has a substantially frusto-pyramid shape with the larger base facing the cooker top. In this case, the suction aperture 4 is provided at the larger base of the box-type casing 2, whereas the discharge aperture 5 is positioned in the vicinity of the smaller base of the box-type casing 2 itself.

On the other hand, the suction device 3 can suck up the fumes or vapours via the suction aperture 4, and then convey these fumes and vapours outside the building, forcing them through the discharge aperture 5, and the fume discharge pipe 6.

In the example illustrated, the suction device 3 comprises two fans 7, which are identical, and are fitted such as to rotate on a support frame 8, which is secured inside the box-type casing 2, at the suction aperture 4, and a pair of electric motors 9, each of which is connected mechanically to a corresponding fan 7, in order to rotate the fan 7 itself by command.

In order to control the suction device 3, the fume hood 1 is also provided with a control panel 10, which in turn is provided with push-buttons and/or slides, by means of which the suction device 3 can be activated, and, optionally, the speed of rotation of the fans 7 can be controlled, such as to regulate the quantity of air conveyed to the exterior per unit of time.

According to a different embodiment, not illustrated, the discharge aperture 5 puts the interior of the box-type casing 2 directly into communication with the environment of the kitchen, such as to discharge air from which the fumes and vapours have been purified, directly into the kitchen. In this case, the fume hood 1 is also provided, upstream from the discharge aperture 5, with a filtering device (not illustrated), such as to retain the fumes and vapours, before returning to the kitchen the air sucked up through the suction aperture 4.

With reference to Figures 1 and 2, the fume hood 1 additionally comprises a display screen 11 (for example a liquid crystal screen similar to those used in portable computers), which is positioned on the exterior of the boxtype casing 2; an execution unit 12, which is commonly known as a console, which can display on the screen 11 a video game or the like, by means of which the person(s) using the fume hood 1 itself can be entertained; and a control panel 13 with push-buttons or the like, by means of which the person(s) present in the kitchen can transmit commands to the execution unit 12, such as to interact with the video game.

In the example illustrated, the video game(s), or rather the programme(s) which generate(s) the latter, are stored directly on a storage device 14 which is present inside the execution unit 12, but could also be stored on an external data support of the optical or magnetic type, or of any other type. In this case, the execution unit 12 is provided with a data reading device 15, inside which the said external data support can be inserted. By means of this reading device 15, the execution unit 12 can access the data stored in the data support, such as to be able to execute the video games stored in the external data support itself, or it can access the data stored in the data support, in order to update the video games stored in the storage device 14.

Optionally, the execution unit 12 can be provided with a device for connection to the Internet 16, by means of which the Internet network can be accessed, such as to be able to play with other users of the network, or to update the video game(s) stored in the storage device 14. In the example illustrated, the device for connection to the Internet 16 can be connected to a conventional telephone line.

Optionally, the connection via the Internet, or a similar telephone connection, can be used by the user to contact a company site, for example a company site which is controlled by the same company which produced the household appliance 1, such as to be able to take part in a game organised by the manufacturing company itself, or another company on its behalf, or to take part in a competition.

Similarly, the connection via the Internet, or a similar telephone connection, can be used by a first user in order to connect up with a second user, so as to put into practice an interactive game.

According to a variant, not illustrated, the display screen 11 and the control panel 13 are integrated in an active display screen, which is commonly known as a touch screen, in which the commands are imparted to the execution unit 12, by touching specific areas of the screen directly.

The execution unit 12 can allow the user to play an animated video game (for example Tetris), or a game which is based on cards (for example solitaire, the game of poker or the like), or it can allow the user to take part in a competition with prizes, which is managed by the company which manufactured the household appliance 1, or another company on its behalf.

In the latter case, the company which manufactures the household appliance 1 can store inside the execution unit 12 one or more winning codes which will be displayed on the screen 11, after the fume hood 1 has carried out a specific number of hours of work. The selection of which code to display can equally well be sequential or random, and will allow the user of the hood to access a competition with prizes, in order to win a prize offered by the manufacturing company, or another company on its behalf.

Optionally, the probability of outputting a specific alphanumerical code can be associated with time of use of the household appliance 1.

According to a different form of the competition with prizes, the execution unit 12 can be able to generate, by command, or at predetermined intervals, random combinations of alphanumerical codes which, from time to time, the user of the fume hood 1 must communicate to the manufacturing company, in order to check whether he or she has acquired the right to take part in the competition with prizes, or has won a prize directly. For example, a push-button (not illustrated) could be provided, which can be pressed from time to time by the user, in order to generate an alphanumerical code which can be compared with a series of codes extracted periodically by the manufacturing company, or another company on its behalf, or, as described hereinafter with reference to particular block diagrams, in order to search for a code already entered, so as to be able to win directly or by drawing of lots.

According to a further form of the competition with prizes, the unit for execution 12 by command, or at predetermined intervals, can be connected up to the Internet site of the manufacturer, via the device for connection to the Internet 16, in order to check whether at that particular moment a prize is on offer, and in this case, to provide all the data in order to permit identification of the user of the fume hood 1, to whomever is allocating this prize, or to request a new code, which will not be visible to the user, in order to be able to take part in another competition (see hereinafter).

It will be appreciated that the description provided for the fume hood 1 1 can be extended to any household appliance, i.e. an oven, a dishwasher, a washing machine, a sauna, a hydromassage tub, etc. This household appliance 1 will be provided with the display screen 11, the execution unit 12, and the control panel 13, such as to be able to display on the screen 11 a video game or a competition with prizes, so as to entertain the person(s) using the household appliance 1 itself.

The execution unit 12, i.e. the console 12, can be provided with the storage device 14, the data reading device 15, and optionally the device for connection to the Internet 16, with the above-described functions.

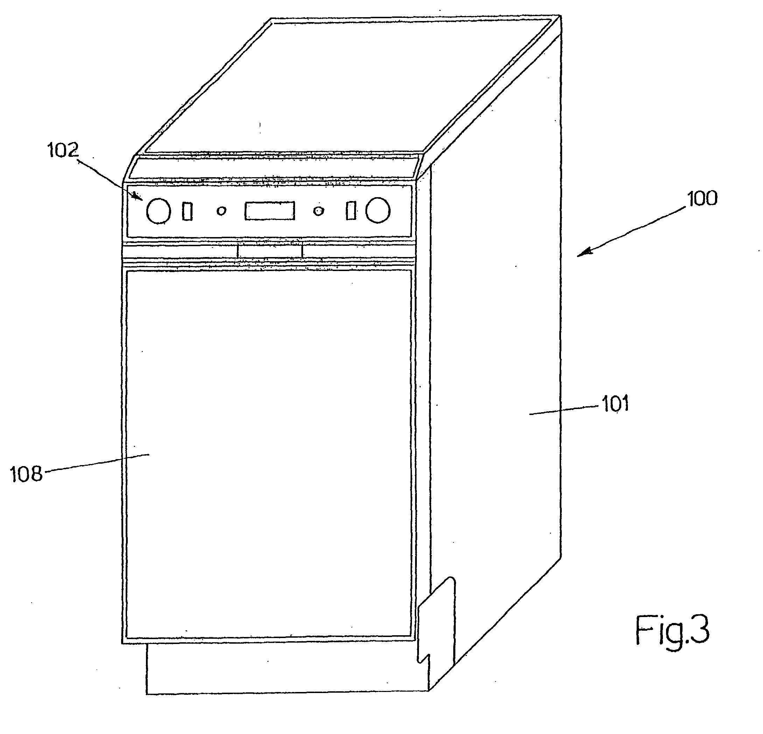

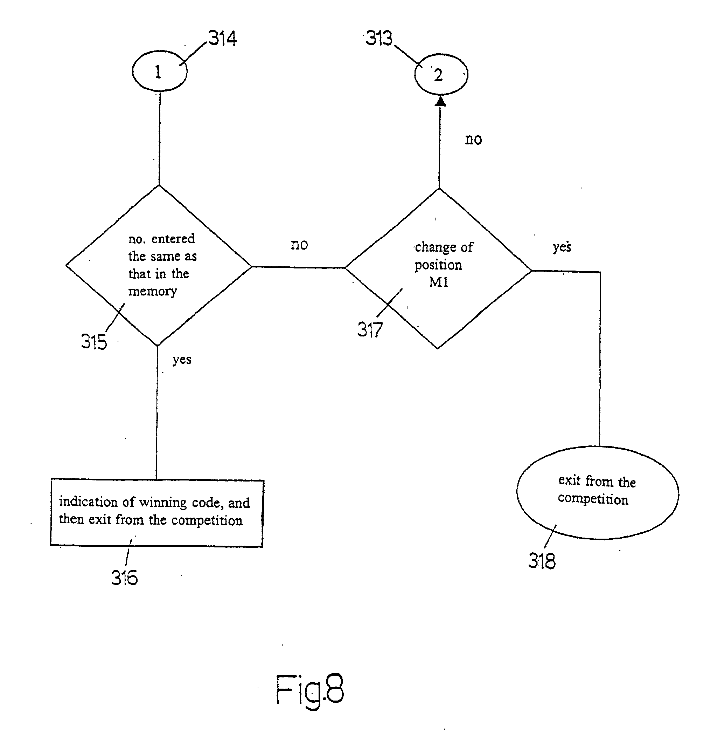

In order better to illustrate the principles of the present invention, figures 3 - 10 show a second embodiment, in which, on a dishwasher 100, using the same mechanical and electronic components which can programme and implement washing programmes, it is possible to take part in a competition and/or a game.

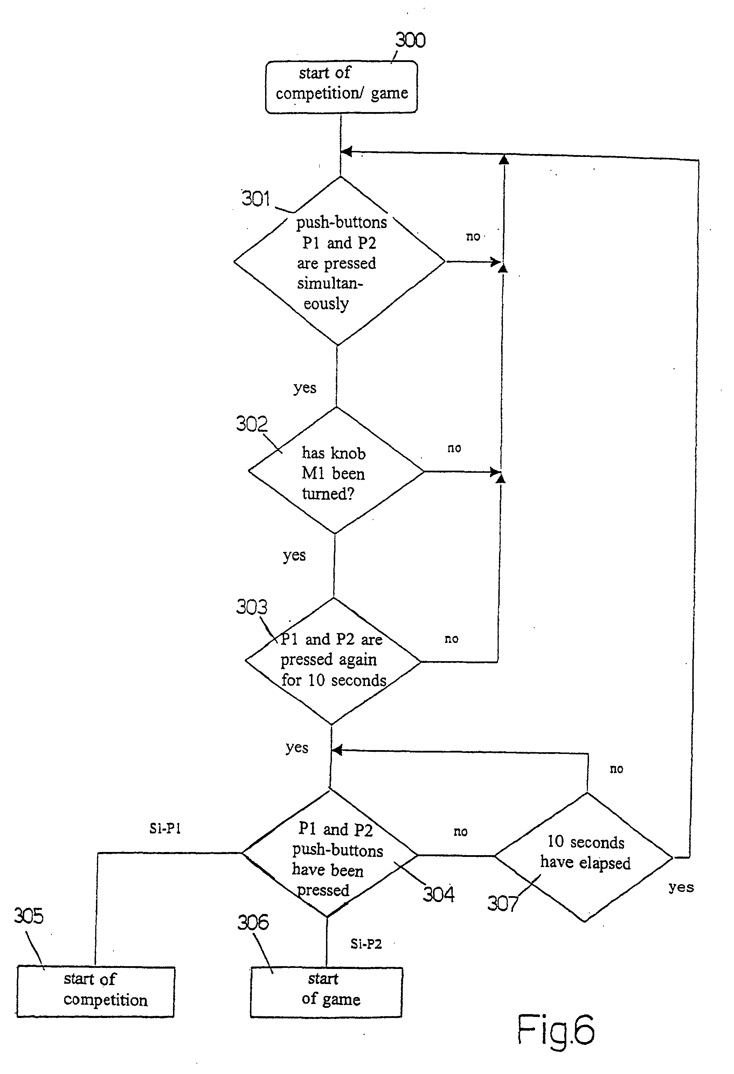

In a conventional manner, the dishwasher 100 comprises a sheet metal casing 101, which contains a series of electromechanical and electronic devices (which cannot be seen in figure 3), and a control console 102, which can not only actuate the washing programme to be carried out by the dishwasher, as required by the user, but also, as will be seen, can enter the data relating to a competition and/or a game (see also with particular reference to figures 6 10).

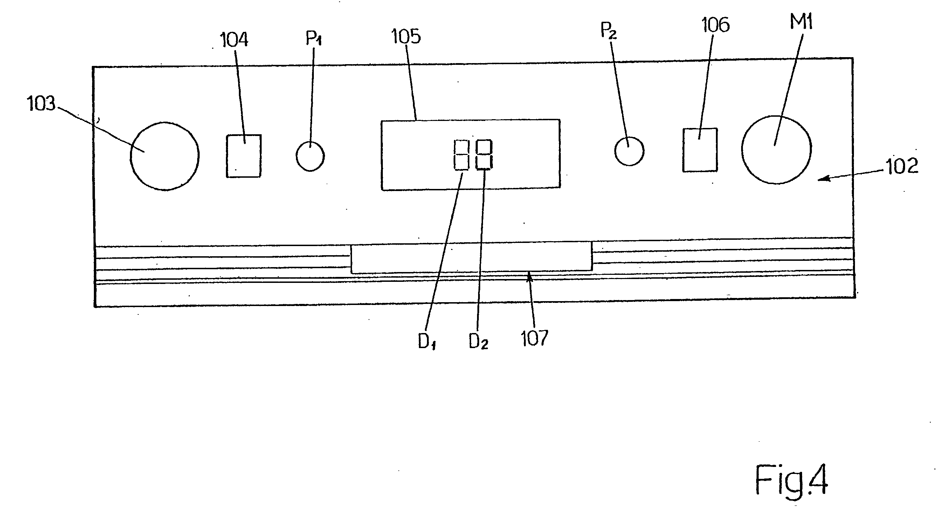

The control console 102 is shown enlarged in figure 4, in order to improve the clarity of reading of the various details.

In figure 4, 103 indicates a selection knob, in order to permit delayed starting of the washing programme. In other words, the knob 103 simply actuates a timer, by means of which the user can determine the exact moment at which the washing programme should start (for example 4 hours after the moment of programming).

The display device 104 shows the figure specifying the time selected by means of the knob 103.

By means of a push-button P1, it is possible to select the half-load condition. In other words, if the dishwasher 100 is only partially loaded, it may be sufficient to carry out a reduced programme for washing the dishes.

In the embodiment shown, a display unit 105 has been used, comprising two digits D1, D2, which each consist of seven luminous segments (four vertical and three horizontal), which, when they are lit at least partially, show a number. It will be appreciated that, as shown in figure 4, if all seven segments are switched on in the digit D1 or D2, the number "8" is displayed.

The console 102 additionally comprises a start/pause push-button B2, by means of which the user switches on or pauses the dishwasher 100.

By means of a washing programme selector switch M1, it is possible to select the programme which is required by the user, and is to be executed by the dishwasher 100. The programme selected by means of the selector switch M1 is displayed by means of a display device 106.

In figure 4, 107 indicates a built-in handle, which can open and close a door 108 for loading/unloading (see figure 3) dishes from the dishwasher 100.

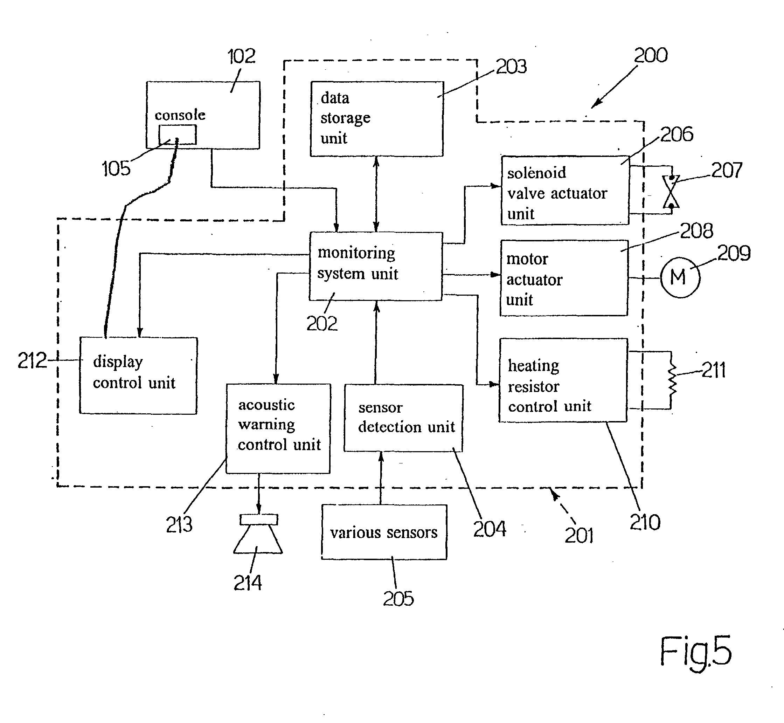

Figure 5 shows a function block diagram 200, which illustrates briefly the functioning of the household appliance, in this case of the dishwasher 100, which is the subject of the present invention.

In figure 5, 201 indicates in broken outline the parts, which constitute an electronic card. In other words, the electronic card 201 comprises the electronic components which are contained in the portion in broken outline.

In greater detail, the electronic card 201 comprises in its interior a monitoring system unit 202, which is responsible for controlling all the operations carried out by means of the other units, a data storage unit 203 which can store both the data inherent in functioning of the dishwasher 100, and those relating to taking part in at least one game and/or at least one competition.

A sensor detection unit 204 is responsible for interfacing sensors 205 with the monitoring system unit 202. These sensors 205 (thermometers, flow meters, etc), are used for functioning of the dishwasher 100 during its own function of washing the dishes.

In addition, the electronic card 201 comprises in its interior an actuator unit 206 for the solenoid valves 207 for control of the washing fluids, an actuator unit 208 for the motors 209, and a control unit 210 for the electrical resistors 211, which can heat the water destined for washing and rinsing of the dishes.

To complete the electronic card 201, there are provided a display control unit 212, which controls the display 105 (see also figure 4), and an acoustic warning control unit 213, which controls a loudspeaker or a buzzer 214. The figure also includes the control console 102, already seen in relation to figure 4.

Figures 6-10 illustrate the block diagrams for the operations which can be carried out by means of the console 102, in order to take part in a competition and/or a game by means of the dishwasher 100, and, this being basically the substance of the present invention, the same electronic card 201 which monitors all the operations relating to washing of the dishes. Furthermore, since separate commands do not exist to actuate the household appliance and to carry out the games functions, the user is far more eager to use the household appliance, as it is considered more user-friendly. Thus, the household appliance which is the subject of the present invention is not only far less expensive than a household appliance on which a separate computer is fitted, but it is also simple to use.

In the block diagram in figure 6, 300 indicates the operation for initialisation of the competition or game.

It should be stated incidentally that both the competition and the game can be carried out by the user both when the dishwasher 100 is at a standstill, or when the dishwasher 100 is carrying out washing.

In step 301, a user who wishes to select a competition or a game needs simply to press the push-buttons P1 and P2 simultaneously, and turn the knob M1, as shown in steps 301 and 302. In order to increase the certainty of the command, the push-buttons P1 and P2 must be pressed, for example, for at least ten seconds (step 303), such that the system understands that the user wants to actuate the competition/game mode.

In step 304, the user decides whether to go into the "competition" or the "game" mode.

In the first case, he keeps only the push-button P1 pressed, in order to reach step 305 relating to the "competition" mode, whereas in the second case he presses only the push-button P2, in order to reach step 306, in which he enters into the "game" mode. To improve the certainty of the system, another step 307 has been provided, in which, by means of a clock, a time of, for example, another ten seconds is counted. If the ten seconds have not yet elapsed, there is a return to step 304, whereas if the ten seconds have elapsed, and the user has not yet progressed to step 305 by pressing only the pushbutton P1, or to step 306 by pressing only the push-button P2, the system returns to the starting point, i.e. immediately after step 300.

The competition given as an example in the present description consists of revealing a number contained in the data storage unit 203 (figure 5). In other words, in this case, it involves simply a number stored in the unit 203, which the user must find. If he succeeds in doing this, he can send the number to the company which manufactured the household appliance and win a prize directly, or the user can be authorised to take part in a draw for a prize.

It is apparent that, without departing from the context of the present invention, it is possible to conceive of a plurality of competitions.

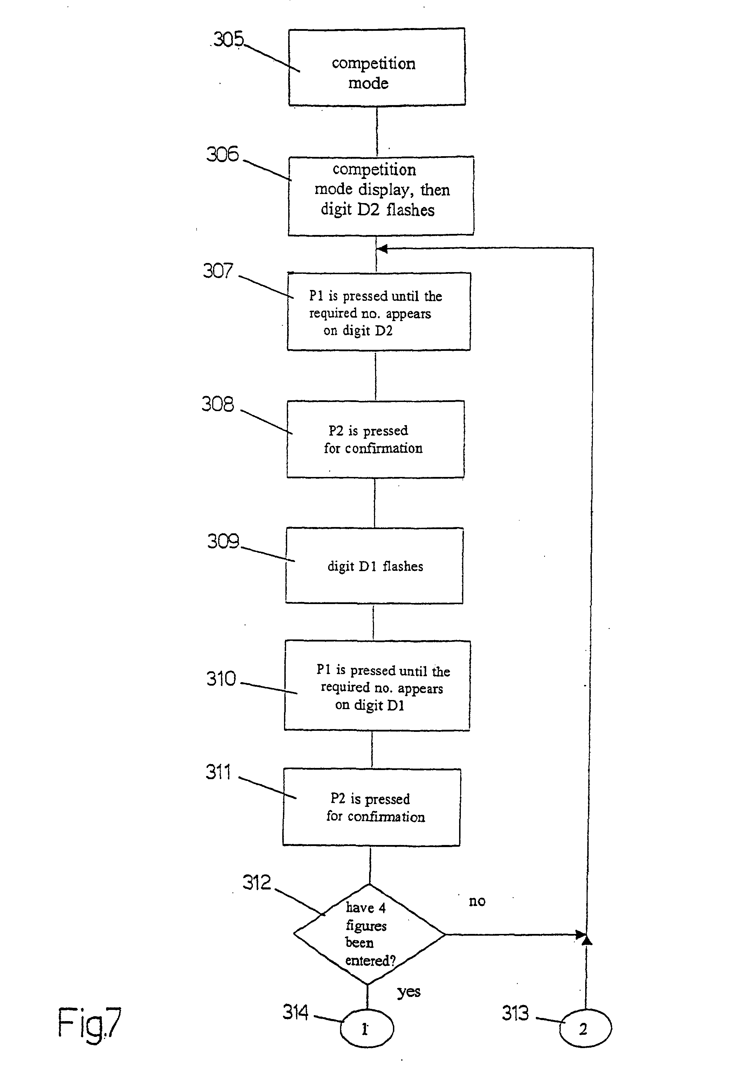

In this case, as shown in the block diagram in figure 7, if the push-button P1 has been pressed, entry into the "competition" mode has taken place.

The second digit D2 begins to flash (figures 4 and 5), as shown in step 306.

The user begins to press the push-button P1, until the number required by the user himself appears on the digit D2. As soon as the number required appears on the digit D2, the user confirms it by pressing the push-button P2.

At this point, the digit D1 begins to flash (step 309), and then, using the same method as that previously described, a number is selected by means of the push-button P1 (step 310), whereas the confirmation is entered by means of the push-button P2 (step 311). By this means, a twodigit number is confirmed, using both the digits D1 and D2.

It will be appreciated that, using the same technique, it is possible to enter a number consisting of more than two figures, by using alternately the digits D2 and D1, and the push-buttons P1 and P2.

For example, if the user wishes to enter the number "1234", it will be sufficient firstly to select the figure "4" on the digit D2, using the methods previously described, then immediately afterwards, to select the figure "3" on the digit D1, then the figure "2" again on the digit D2, and the figure "1" on the digit D1.

If the four figures which give the number "1234" have been entered, the system has reached step 312.

If all four figures required have not been entered, the process regresses, such that completion can be requested (step 313).

If, on the other hand, as shown in step 314, a number consisting of four figures has been entered correctly, the- system compares this number with that contained in the data storage unit 203 (figure 5). If these number coincide, a prize is won, which, for example, is determined by the manufacturer of the household appliance, as shown in step 316.

If on the other hand the two numbers do not coincide, transition takes place to step 317, where there are two options, i.e. either to repeat the same competition and return to step 313, then in reverse to step 307, or to proceed to step 318, where exiting from the "competition" mode takes place.

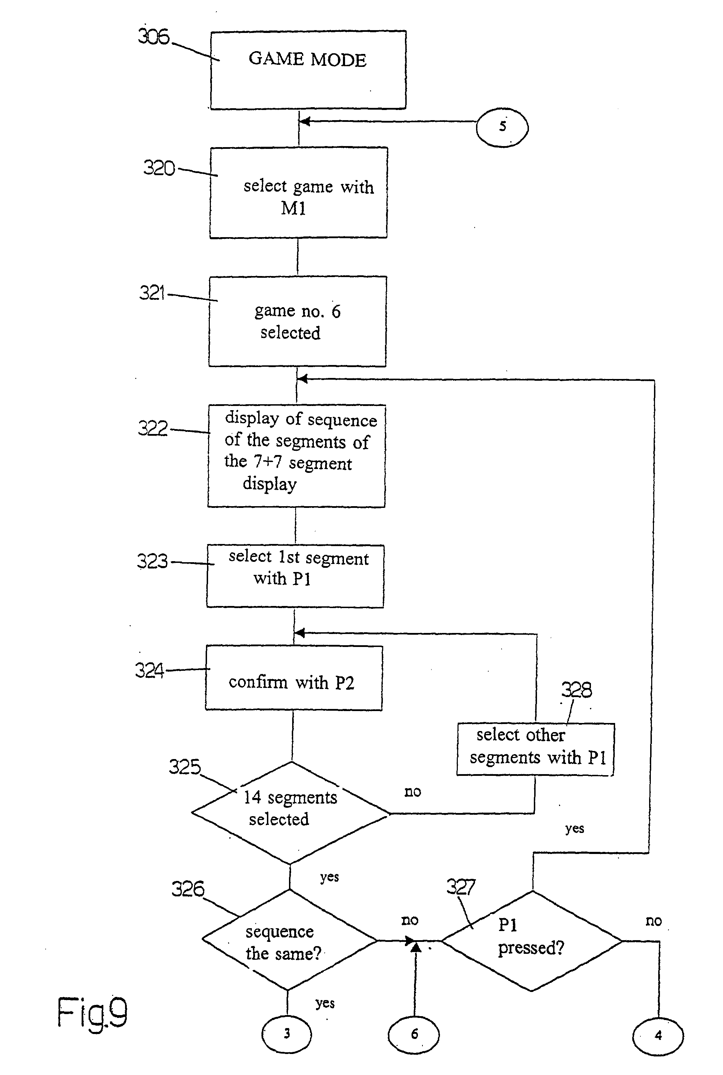

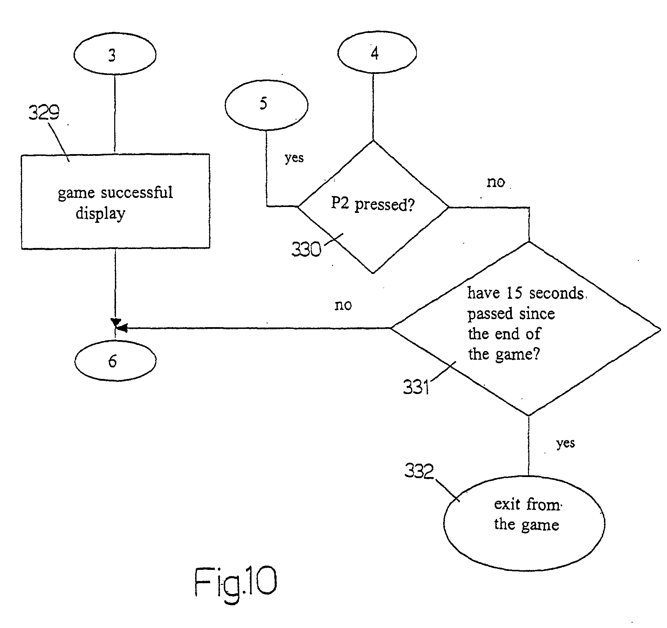

On the other hand, figures 9 and 10 schematise a hypothetical block diagram which illustrates the "game" mode.

In step 320, a game is selected by using the knob M1, and by selecting from amongst a plurality of games which are loaded in the unit 203, and are controlled by the monitoring system unit 202 (figure 5).

Let it be assumed that the game selected is "game no. 6" (step 321), which consists of a very fast sequence of the seven segments which constitute each digit D1, D2 (step 322).

The user simply needs to repeat the sequence of appearance of the seven segments (for each digit D1, D2), using the following technique:
- by means of the push-button P1, selection of the first segment (step 323), for example of the digit D2, and confirmation by means of the push-button P2 (step 324);
- selection by this means of the fourteen segments which constitute the digits D1, D2 (step 325);
- in step 326, the system compares whether the sequence entered by the user is or is not equivalent to that corresponding to "game no. 6" previously selected;
- if the sequence has been guessed, the user is informed that the game has been won, for example by simultaneous flashing of the digits D1, D2 (step 329) (figure 10), or by means of an acoustic signal, via the loudspeaker or buzzer 214 (figure 5);
- on the other hand, if the sequence has not been guessed, there is transition to step 327, where the push-button P1 is pressed once more, and the game re-starts, by attempting to guess another randomly generated sequence of appearance of the segments on the digits D1, D2;
- at step 325, there is also a step 328, in which it is possible to repeat the game with the push-buttons P1 and P2, without having to display again the sequence of appearance of the segments which belong to the digits D1 and D2;
- if, instead of pressing the push-button P1, the user presses the push-button P2 (step 330), the system returns to the start, making it possible to select a new game, for example "game no. 4" (instead of the previous "game no. 6"), again using the knob M1 (step 320);
- if, on the other hand, the user has not pressed the push-button P2 (step 330), the system goes to step 331, where a device for measuring the time counts fifteen seconds, for example;
- if, after these fifteen seconds, the user has not completed any further operation, the system exits from the "game" mode (step 332).

It will be appreciated that it is conceivable for persons skilled in the art to apply to the dishwasher 100 the same arrangements as those described for the fume hood 1, i.e. for example a device 16 for connection to the Internet 16 (see figure 2).

## Claims

1. Household appliance comprising a casing, functional devices arranged inside the casing for execution of operations typical of the household appliance itself, a control unit arranged inside the casing for controlling the functional devices, and a user panel fixed on the outside of the casing and connected to the control unit; the user panel comprising input means for transmitting commands to the control unit and a display screen for showing information sent by the control unit; said household appliance being **characterised in that** the control unit comprises execution means able to interact with the user panel in order to show on the display screen at least one given sequence of numbers by which a user can take part in a competition with prizes.

2. Household appliance according to Claim 1, wherein the execution means comprise a storage device for storing said given sequence of numbers.

3. Household appliance according to Claim 1, wherein the execution means comprise a reading device for reading said given sequence of numbers from an external data support.

4. Household appliance according to Claim 1, wherein the execution means comprise a device for connection to the Internet for downloading the given sequence of numbers.

5. Household appliance according to Claim 1, wherein the execution means is able to generate said given sequence of numbers.

6. Household appliance according to any one of the preceding Claims, wherein said execution means are able select said given sequence of numbers from a group of sequences of numbers.

7. Household appliance according to any one of the preceding Claims, wherein said execution means are able to interact with the user panel in order to show on the display screen said given sequence of numbers after the appliance has carried put a specific number of hours of work.

8. Household appliance according to any one of the preceding Claims, wherein the execution means interacts with the user panel in order to show on the display screen said given sequence of numbers in response to a command given to the input means.

9. Household appliance according to any one of the preceding Claims, wherein it is a fume hood.

10. Household appliance according to any one of Claims 1-8, wherein it is a dishwasher.

11. Household appliance according to any one of Claims 1-8, wherein it is a sauna.

12. Household appliance according to any one of Claims 1-8, wherein it is a hydromassage tub, which is optionally provided with ultrasound.

13. Household appliance according to any one of Claims 1-8, wherein it is a device for carrying out gymnastic exercises.

## Patentansprüche

1. Haushaltsgerät, aufweisend ein Gehäuse, funktionelle Einrichtungen, die in dem Gehäuse zur Ausführung von Betriebsabläufen angeordnet sind, die für das Haushaltsgerät typisch sind, eine Steuereinheit, die in dem Gehäuse zum Steuern der funktionellen Einrichtungen angeordnet ist, und ein Nutzerpult, das auf der Außenseite des Gehäuses fest angebracht und mit der Steuereinheit verbunden ist; wobei das Nutzerpult eine Eingabeeinrichtung zum Übertragen von Befehlen zu der Steuereinheit und einen Anzeigebildschirm zum Darstellen von Information aufweist, die durch die Steuereinheit gesendet wird; wobei das Haushaltsgerät **dadurch gekennzeichnet ist, dass** die Steuereinheit eine Ausführungseinrichtung aufweist, die geeignet ist, mit dem Nutzerpult zu interagieren, um auf dem Anzeigebildschirm zumindest eine gegebene Abfolge von Zahlen zu zeigen, durch die ein Nutzer an einem Wettbewerb mit Preisen teilnehmen kann.

2. Haushaltsgerät nach Anspruch 1, wobei die Ausführungseinrichtung eine Speichereinrichtung zum Speichern der gegebenen Abfolge von Zahlen aufweist.

3. Haushaltsgerät nach Anspruch 1, wobei die Ausführungseinrichtung eine Leseeinrichtung zum Lesen der gegebenen Abfolge von Zahlen aus einem externen Datenträger aufweist.

4. Haushaltsgerät nach Anspruch 1, wobei die Ausführungseinrichtung eine Einrichtung zur Verbindung mit dem Internet zum Herunterladen der gegebenen Abfolge von Zahlen aufweist.

5. Haushaltsgerät nach Anspruch 1, wobei die Ausführungseinrichtung in der Lage ist, die gegebene Abfolge von Zahlen zu erzeugen.

6. Haushaltsgerät nach einem der vorangehenden Ansprüche, wobei die Ausführungseinrichtung in der Lage ist, die gegebene Abfolge von Zahlen aus einer Gruppe von Abfolgen von Zahlen zu wählen.

7. Haushaltsgerät nach einem der vorangehenden Ansprüche, wobei die Ausführungseinrichtung in der Lage ist, mit dem Nutzerpult zu interagieren, um auf dem Anzeigebildschirm die gegebene Abfolge von Zahlen zu zeigen, nachdem das Gerät eine bestimmte Anzahl von Arbeitsstunden gelaufen ist.

8. Haushaltsgerät nach einem der vorangehenden Ansprüche, wobei die Ausführungseinrichtung mit dem Nutzerpult interagiert, um auf dem Bildschirm die gegebene Abfolge von Zahlen in Reaktion auf einen Befehl zu zeigen, der an die Eingabeeinrichtung gegeben wird.

9. Haushaltsgerät nach einem der vorangehenden Ansprüche, wobei es sich bei ihm um eine Dunstabzugshaube handelt.

10. Haushaltsgerät nach einem der Ansprüche 1 bis 8, wobei es sich bei ihm um eine Geschirrspülmaschine handelt.

11. Haushaltsgerät nach einem der Ansprüche 1 bis 8, wobei es sich bei ihm um eine Sauna handelt.

12. Haushaltsgerät nach einem der Ansprüche 1 bis 8, wobei es sich bei ihm um eine Hydromassagewanne handelt, die optional mit Ultraschall ausgestattet ist.

13. Haushaltsgerät nach einem der Ansprüche 1 bis 8, wobei es sich bei ihm um eine Einrichtung zur Ausführung gymnastischer Übungen handelt.

## Revendications

1. Appareil domestique comprenant un boîtier, des dispositifs fonctionnels agencés à l'intérieur du boîtier afin d'assurer l'exécution d'opérations classiques de l'appareil domestique lui-même, une unité de commande agencée à l'intérieur du boîtier afin de commander les dispositifs fonctionnels, et un panneau d'utilisateur fixé sur l'extérieur du boîtier et raccordé à l'unité de commande ; le panneau d'utilisateur comprenant des moyens d'entrée destinés à transmettre des instructions à l'unité de commande et un écran d'affichage destiné à présenter des informations envoyées par l'unité de commande ; ledit appareil domestique étant **caractérisé en ce que** l'unité de commande comprend des moyens d'exécution pouvant interagir avec le panneau d'utilisateur dans le but de présenter sur l'écran d'affichage au moins une série de chiffres donnée, par laquelle un utilisateur peut participer à un concours avec des jeux.

2. Appareil domestique selon la revendication 1, dans lequel les moyens d'exécution comprennent un dispositif de mémorisation destiné à mémoriser ladite série de chiffres donnée.

3. Appareil domestique selon la revendication 1, dans lequel les moyens d'exécution comprennent un dispositif de lecture destiné à lire ladite série de chiffres donnée sur un support de données externe.

4. Appareil domestique selon la revendication 1, dans lequel les moyens d'exécution comprennent un dispositif destiné à assurer une connexion à Internet afin de télécharger la série de chiffres donnée.

5. Appareil domestique selon la revendication 1, dans lequel les moyens d'exécution sont aptes à produire ladite série de chiffres donnée.

6. Appareil domestique selon l'une quelconque des revendications précédentes, dans lequel lesdits moyens d'exécution sont aptes à sélectionner ladite série de chiffres donnée parmi un groupe de séries de chiffres.

7. Appareil domestique selon l'une quelconque des revendications précédentes, dans lequel lesdits moyens d'exécution sont aptes à interagir avec le panneau d'utilisateur dans le but de présenter sur l'écran d'affichage ladite série de chiffres donnée, après que l'appareil a assuré un nombre d'heures de fonctionnement spécifique.

8. Appareil domestique selon l'une quelconque des revendications précédentes, dans lequel les moyens d'exécution interagissent avec le panneau d'utilisateur dans le but de présenter sur l'écran d'affichage ladite série de chiffres donnée en réponse à une instruction donnée aux moyens d'entrée.

9. Appareil domestique selon l'une quelconque des revendications précédentes, dans lequel il s'agit d'une hotte aspirante.

10. Appareil domestique selon l'une quelconque des revendications 1 à 8, dans lequel il s'agit d'un lave-vaisselle.

11. Appareil domestique selon l'une quelconque des revendications 1 à 8, dans lequel il s'agit d'un sauna.

12. Appareil domestique selon l'une quelconque des revendications 1 à 8, dans lequel il s'agit d'un bassin d'hydromassage, qui est en option équipé d'un dispositif à ultrasons.

13. Appareil domestique selon l'une quelconque des revendications 1 à 8, dans lequel il s'agit d'un dispositif pour la pratique d'exercices de gymnastique.
